# EUROPEAN PATENT APPLICATION

(11) **EP 1 559 921 A1**
(43) Date of publication of application: **03.08.2005**
(21) Application number: 05001671.6
(22) Date of filing: 27.01.2005
(51) Int. Cl.: F16B 12/52

(54) **Fitting for assembling three-dimensional structures**

(30) Priority: 27.01.2004 IT MI20040101
(71) Applicant: Formenti & Giovenzana S.p.A., 20050 Veduggio Con Colzano (Milano) (IT)
(72) Inventor: Peregalli, Luciano, 20050 Veduggio con Colzano (MI) (IT)
(74) Representative: Simino, Massimo

(57) **Abstract**

A fitting for assembling three-dimensional structures, composed of at least three mutually orthogonal tubes (33, 34, 35), preferably having a square section, which comprises a joint, preferably a die-cast joint, formed by three orthogonal square plates (1, 2, 3), the three tubes being secured thereto by screw stays, which engage with screw anchors inside the tubes, the end of one of the tubes (33) being engaged in the housing defined by the three plates, the ends of the other tubes (35, 36) juxtaposing endwise the outer wall of the plates (1, 2).

## Description

The present invention relates to a fitting for assembling at least three mutually orthogonal tubes, particularly for forming three-dimensional structures, such as support frames for tables, footboards and the like, allowing easy assembly on site.

Assembly components or systems are known for forming structures which require little space for storage before use and be easily and simply carried to the site of use, for later assembly.

Typical examples thereof are tables of various sizes, composed of a wooden or crystal top supported by a frame, whose components are assembled by means of screws.

A technical problem to be solved for this kind of frames is to assure the required structural stiffness, without using too many screws that, for aesthetic reasons, shall be preferably concealed in the structure, or at least shall not project out of the visible contour of the structure.

Similarly, the tubular structure assembling members shall not be too conspicuous, so that the structure seems to be only composed of the tubular elements.

This problem is solved by a fitting according to claim 1.

The features of the invention and the advantages derived therefrom will be more apparent from the following description of a preferred embodiment and variants thereof, with reference to the accompanying drawings, in which
- Figure 1 is a schematic perspective view of the outer side of a first embodiment of a fitting according to the present invention;
- Figure 2 is a perspective schematic view of the inner side of the fitting of Figure 1;
- Figure 3 is an exploded perspective view of a fitting according to the present invention according to a different embodiment;
- Figure 4 is a partial perspective view of a frame obtained by the fitting of figure 1;
- Figure 5 is a sectional view, taken along the section line I-I of Figure 4 and
- Figure 6 is a partial and exploded perspective view of a frame obtained by a fitting system according to the present invention and according to a different embodiment.

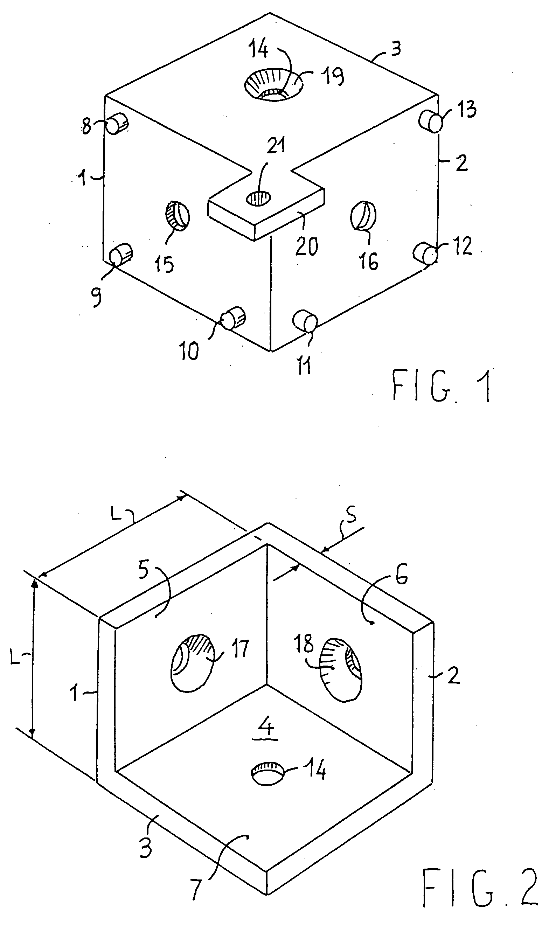

The fitting according to the present invention comprises, a metal joint as shown in Figures 1 and 2.

Referring to Figures 1 and 2, the joint is a one-piece construction composed of at least three plates 1, 2, 3 disposed in angular relationship with each other, having a thickness S of approximately 6 to 8 mm and a size corresponding to that of the tubes to be assembled.

Preferably, but without limitation, the tubes to be assembled in angular relationship with each other have a square section. Hence, the plates 1, 2, 3 are preferably orthogonal one each other, and have a substantially a square section, with a side length L equal to the tube side width (approximately 40, 50, 60 mm), and increased by the plate thickness S, at the intersection between the plates.

The plates form (Figure 2) a prismatic housing 4 suitable for housing the end of a first tube, not shown in figure 1 and 2, which abuts against the wall 7, inside the housing of the plate 3, whereas the walls 5, 6 inside the housing of the plates 1, 2 form shoulders for side abutment and alignment of the flanks of the end of the first tube.

A through hole, 15, 16, 14 is formed at a suitable approximately central position in the three plates 1, 2, 3 respectively, for a screw fastener.

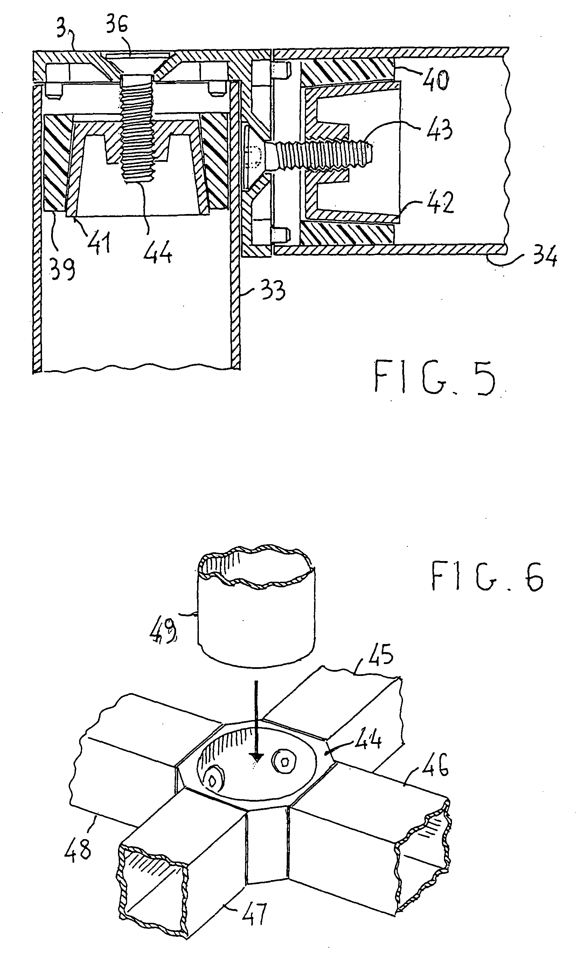

As described below, with reference to the sectional view of Figure 5, the first tube is firmly retained in the housing 4 by a screw fastener in the through hole 14, which is engaged with a screw anchor accommodated in the respective tube.

As shown in Figure 1, the head of the screw fastener is prevented from protruding out of the outer face of the plate 3 by forming a recess or undercut 19 in the through hole 14 on the outer side of the plate 3, suitable for housing the screw head.

Preferably, but without limitation, tapered head screws may be used, having a socket for an hexagonal wrench (widely known as "Allen wrench") and the recess 19 has an accordingly tapered shape.

The plates 1, 2 form, by their inner walls, shoulders for side abutment of the end of a first tube housed in the housing 4, and further form, by their outer walls, an end abutment for the end of a second and a third tube respectively.

For accurate relative positioning of the tubes and the joint, the outer walls of the plates 1 and 2 have protruding elements, preferably cylindrical beveled head alignment pins 8, 9, 10, 11, 12, 13, to be inserted in inside the tube.

While two pins, such as 8, 10 and 11, 13, to be inserted in the opposite vertex of the prism formed by the tubes are sufficient, a greater stiffness and indeformability of the tube in the coupling area may be achieved by using a greater number of alignment pins, preferably three, as shown in the Figures, or even more, or even a projecting frame whose external contour corresponds to the internal contour of the tube.

The tubes abutting endwise against the outer walls 1 and 2 of the joint, which are aligned by the pins 8, ... 13 are firmly fastened to the joint by two screws, received in the holes 15, 16 respectively of the plates, and engaging in screw anchors inside the tubes, as shown in the sectional view of Figure 5.

In order to prevent the screw heads in the housing 4 from interfering with the end of the first tube, which is accommodated in the same housing on the inner side of the plates 1 and 2, the through holes 15, 16 have a recess or undercut, 17, 18 respectively (Figure 2) for housing the screws head. This recess also has a tapered shape.

By using four joints as described above and four tubes may be first assembled a square or rectangular frame or flat frame, for later application thereon of four tube elements, oriented perpendicular to the frame with their ends in the housing 4 of the joints, which wholly conceal the frame assembling screws.

These additional tube elements may appropriately be the vertical legs of a frame for a table or bench, on which a crystal, wooden or metal top may be fastened or simply laid.

Suitably, to secure the horizontal table top to the support frame so formed, the plate 3, as shown in Figure 1, extends, at the corner between the first and the second plate 1, 2, by a tab 20 having a through hole 21 therein, whose axis is perpendicular to the plate 3.

On the underside of the tab 20, the hole 21 preferably has a tapered recess for receiving the head of a screw, which has to be inserted from below to engage a corresponding threaded socket of a horizontal table top, or more generally of a panel supported by the table.

If the horizontal top is a crystal plate, it may be simply laid on the frame, preferably by interposing suitable resilient inserts therebetween, for instance in the sockets 19, to lie over and conceal the screw heads therein.

In this case, the tab 20 with the hole is unnecessary and may be omitted, further considering that it would be anti-aesthetically visible through the transparent top.

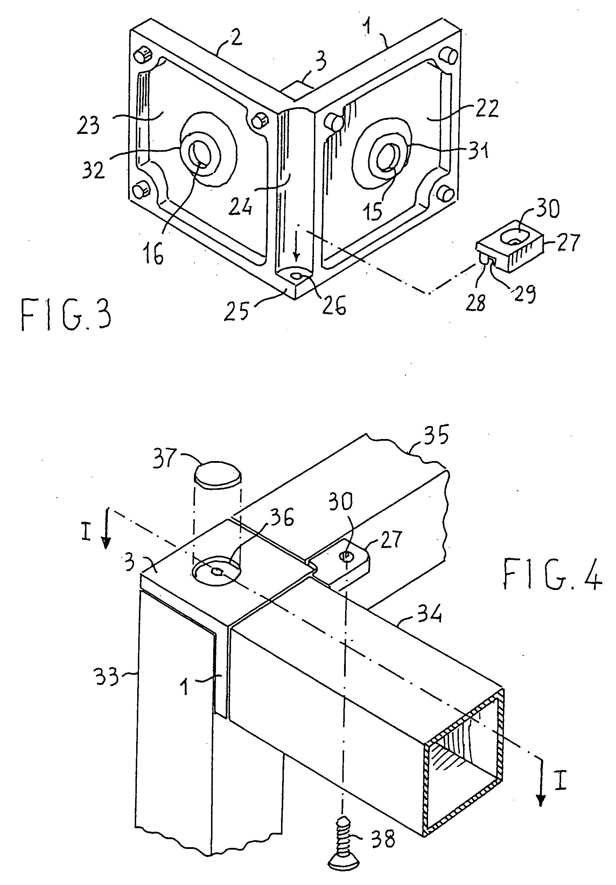

In this respect, to avoid the need of providing different joints for different applications, and to achieve the further advantage of providing a mass-producible die-cast joint structure, with material and cost savings, Figure 3 shows a preferred embodiment of a joint suitable for the fitting of the present invention.

The parts of Figure 3 that are functionally equivalent to those of Figures 1 and 2 are indicated by the same reference numerals.

The embodiment of Figure 3 basically differs from that of Figures 1 and 2 in that the plates 1 and 2 which form the joint have suitable recesses or undercuts on their outer faces.

The dihedral formed by the plates 1 and 2 also has a recess or undercut 24 at its vertex, almost all along its length, while leaving a small tab 25, level with the plate 3 and extended in the plane of the plate 3, said tab 25 having a socket 26 therein, closed at its bottom.

In place of the tab 20 of Figure 1, a removable rag bolt 27 is provided, having a pin 28 formed thereon, with an undercut 29 around it, which pin is to be introduced in the housing 26.

When the pin 28 is inserted inside the socket 26, the underside (in Figure 3) of the rag bolt 27 is substantially flush with the underside (in Figure 3) of the plate 3, and is only partly visible.

The rag bolt 27 has a through socket 30, which is functionally equivalent to the hole 21 of Figure 1, which is designed to receive a screw for fastening a flat top (of a table or the like) thereon.

Preferably, but without limitation, the socket 30 has an undercut for receiving the head of such screw fastener.

The recesses 22 and 23 and the undercut 24 form a frame at the periphery of the plates 1 and 2, having a shape and size substantially equal to those of the tubular elements wherewith they are to be coupled endwise.

In the recesses 22, 23, the frustoconical relief 31, 32 is used to form a socket on the opposite face of the plates 1, 2 for the head of a screw passing through the apertures 15, 16.

Though this is not visible from Figure 3, an identical recess with a central relief is provided on the inner face (or upper face, when seen in the view of Figure 3) of the plate 3.

This recess leaves a frame at the periphery of the inner face of the plate 3, having a shape and a size substantially equal to those of the tubular element to be introduced in the housing formed by the joint.

Figure 4 is a partial top perspective view of the frame structure obtained by using the joint as described with reference to Figure 3.

After assembly, the plate 3 and the edges of the plates 1 and 2 are the only visible parts of the joint.

The tubular element 33, which is inserted, as an upright or table leg, in the housing formed by the joint, wholly conceals the assembling screws which connect the tubular elements 34 and 35 (which lie horizontally in the Figure) to the joint.

The head 36 of the screw for fastening the upright 33 to the joint is only visible, although it will be concealed by a panel or table top, not shown, lying thereon.

If the latter is transparent, e.g. a crystal plate, the head 36 may be easily concealed by laying a resilient insert 37 thereon, to be also used as an abutment for the plate.

However, if the panel that lies on the frame is to be secured thereto, the rag bolt 27, which is coupled to the joint by means of its pin 28 (see Figure 3), provides a through socket 30 for a screw fastener 38.

As a complement to the description, the sectional view of Figure 5 shows a preferred embodiment of screw anchors, which assure fastening of the tubular elements to the joint.

These screw anchors are made of a resilient bushing 39, 40 (in one or more parts) with a peripheral wall whose shape corresponds to that of the inner wall of the tubular element 33, 34 in which it is housed and a cylindrical or slightly tapered inner wall.

A rigid cup 41, 42, having a frustoconical peripheral wall and a bottom with a threaded socket is inserted in the bushing, to be coupled with an assembling screw 43, 44 engaged in the joint.

By tightening the screw, the elastic screw anchor 33, 34 is caused to expand and to be firmly engaged in the corresponding tubular element, as well as to exert a pulling action to firmly couple the end of the tubular element to the joint.

The structure so formed has an excellent stiffness and particularly any transverse stress exerted on the upright is effectively opposed not only by the firm endwise coupling, but also by the reaction exerted by the side shoulder in which the end of the upright is received.

The above joint, particularly referring to Figure 3, may be easily mass-produced by die-casting, by preferably using as a material an aluminum bronze, e.g. the alloy GZnA14Cu3, which is composed by 4% Al, 3% Cn and Zn for the balance (with traces of Mg).

The above description relates to a structure composed of tubular elements, appropriately obtained by extrusion, which have a square section and are identical.

However, the same inventive concepts may be obviously used to make structures with tubes of different sections, e.g. a circular section, and differing sizes.

Also, the joint may be composed of more than three plates, suitable for assembling more than three tubes.

For example, a joint that forms a cubic box, having one open side, allows to form a flat cross journal for supporting a table board, which cross journal is supported by an upright inserted in the joint through its open face.

A similar structure may be provided to form a table foot and ensure the required stability.

Figure 6 shows an exemplary structure of this type with a generally prismatic joint 44, four tubular elements having a square section 45, 46, 47, 48 being fastened thereto, and forming a cross journal with orthogonal branches.

A tubular element 46, having a circular section, is fitted perpendicular to the cross journal in the cavity formed by the joint and conceals the screws used for fastening the cross journal branches.

The only exposed fastener member is the screw that is used to secure the tubular element 49 to the cross journal.

## Claims

1. A fitting for assembling at least three mutually transverse tubes (33,34,35; 45,46,47,48), comprising a joint composed of at least three mutually transverse plates (1, 2, 3) which define a housing (4) for receiving the end of a first tube, wherein:
- the inner walls (5, 6) of the housing, defined by a first and a second of said plates, form shoulders for allowing side abutment and alignment of the flanks of said end of a first tube,
- the inner wall of a third (3) of said plates forms an end abutment for said end of a first tube,
- the outer walls of said first (1) and said second plate (2) form an end abutment for the ends of a second and a third tubes respectively, and comprise protruding means (8, 9, ... 13) adapted to cooperate with the inner wall of said second and third tubes, for alignment thereof on said abutment,
each of said at least three plates having a through hole (14, 15, 16) for receiving a screw fastener.

2. A fitting as claimed in claim 1, wherein each of said at least three plates having a recess (17, 18, 19) suitable for receiving the head of its respective screw fastener, said recess being formed on the outer wall of said third plate and on the inner wall (5, 6) of said first and second plates.

3. A fitting as claimed in claim 1 or 2, wherein said plates (1, 2, 3) are orthogonal.

4. A fitting as claimed in claim 1, 2 or 3 wherein, at the corner between said first (1) and second (2) plates, said third plate (3) extends by an overhanging tab (20), with a through hole (21) extending therein, perpendicular to said plate, for attachment of a panel to said joint.

5. A fitting as claimed in claims 1 and 3 wherein, at the corner between said first (1) and second (2) plates, said third plate extends by a tab (25) which is designed to engage a removable rag bolt (27) for attachment of a panel to said joint.

6. A fitting as claimed in claim 5 wherein, on the face opposite the outer wall of said third plate, said tab (25) has a socket (26) suitable for receiving a pin (28) of said removable rag bolt (27).

7. A fitting as claimed in any of claims 1 to 6, wherein said protruding means (8, 9, ... 13), for alignment of said second and third tubes, consist of at least one pair of pins (8, 10, 11, 13) arranged at opposite corners of said first and second plates.

8. A fitting as claimed in any of the preceding claims 1 to 7, wherein said joint is a die-cast aluminium bronze joint, with undercuts formed therein to receive said plates.

9. A structure comprising at least three mutually transverse tubes (33, 34, 35; 45, 46, 47, 48), which are joined together at a junction point, **characterized in that** said tubes are removably joined together by interposing a fitting according to any one of claims 1 to 8.

10. A structure as claimed in claim 9, wherein each screw fastener for engaging the through hole (14, 15, 16) of said at least three plates is designed for engagement with a screw anchor in its respective tube (33, 34, 35; 45, 46, 47, 48).

11. A structure as claimed in claim 9 or 10, wherein said tubes (33, 34, 35) have a square section, with a given width (L), and wherein:
- said first and second plates, when seen from the outside, are rectangular, with the shorter side being essentially equal to said given width (L) of said tubes and the longer side being essentially equal to said given width (L) of said tubes, increased by the thickness (S) of said plates, and
- said third plate, when seen from the inside, has a square shape, with a side essentially equal to said given width (L) of said tubes.
